# EUROPEAN PATENT APPLICATION

(11) **EP 4 379 683 A1**
(43) Date of publication of application: **05.06.2024**
(21) Application number: 22863061.2
(22) Date of filing: 10.08.2022
(51) Int. Cl.: G07C 9/00

(54) **PROTECTION METHOD, SMART LOCK, AND COMPUTER READABLE STORAGE MEDIUM**

(30) Priority: 06.09.2021 CN 202111039095
(71) Applicant: Huawei Technologies Co., Ltd., Shenzhen, Guangdong 518129 (CN)
(72) Inventor: WANG, Weigang, Shenzhen, Guangdong 518129 (CN); TAO, Rong, Shenzhen, Guangdong 518129 (CN); AI, Yong, Shenzhen, Guangdong 518129 (CN)
(74) Representative: Huawei European IPR
(86) International application number: PCT/CN2022/111507
(87) International publication number: WO 2023/029920

(57) **Abstract**

This application relates to a protection method, an intelligent lock, and a computer-readable storage medium. In the method, it is confirmed, based on a two-level detection mechanism, that the intelligent lock is subject to an electromagnetic attack (for example, a high-voltage electromagnetic attack). A first-level detection mechanism detects, in a first period, that a quantity of trigger events is greater than or equal to a first preset value, and considers that the intelligent lock is subject to a suspected attack. In preset duration in which the first-level detection mechanism detects the suspected attack, a second-level detection mechanism obtains a plurality of light intensity values, and detects that variation amplitudes of the plurality of light intensity values exceed a preset threshold, and confirms that the intelligent lock is subject to the electromagnetic attack (for example, the high-voltage electromagnetic attack). After the two-level detection mechanism confirms that the intelligent lock is subject to the electromagnetic attack, the intelligent lock enters a protection mode to perform active protection. This prevents the lock from being opened mistakenly and simultaneously protects each peripheral device from being damaged, so as to improve security.

## Description

### CROSS-REFERENCE TO RELATED APPLICATIONS

This application claims priority to Chinese Patent Application No. 202111039095.4, filed with the China National Intellectual Property Administration on September 6, 2021 and entitled "PROTECTION METHOD, INTELLIGENT LOCK, AND COMPUTER-READABLE STORAGE MEDIUM", which is incorporated herein by reference in its entirety.

### TECHNICAL FIELD

This application relates to the field of intelligent door locks, and in particular, to a protection method of an intelligent lock, an intelligent lock, and a computer-readable storage medium.

### BACKGROUND

As smart homes are widely applied, intelligent door locks are also used by a growing quantity of common consumers. Although it is more convenient to use an intelligent door lock, there are some attack manners for features of the intelligent door lock. For example, some attack tools crack the intelligent door lock by launching an electromagnetic attack (for example, a high-voltage electromagnetic attack) on the intelligent door lock. For example, an electromagnetic wave generated by an attack tool easily causes a mainboard of the intelligent door lock to crash, and may cause the intelligent door lock to be re-enabled, and the intelligent door lock is further unlocked. In addition, the electromagnetic wave generated by the attack tool may also affect a control circuit of the intelligent door lock, and generate an unlocking signal through coupling. In this way, the door lock receives an interference signal (for example, a similar unlocking instruction). Consequently, the intelligent door lock is opened mistakenly. The foregoing security risks of the intelligent door lock cause trouble to consumers to some extent. Therefore, security protection performance of the intelligent door lock needs to be improved.

### SUMMARY

To resolve the foregoing technical problem, this application provides a protection method, an intelligent lock, and a computer-readable storage medium. An active protection mechanism for an electromagnetic attack (for example, a high-voltage electromagnetic attack) is used, so that an intelligent door lock effectively detects the electromagnetic attack (for example, the high-voltage electromagnetic attack) and performs targeted protection, thereby improving security of the intelligent door lock.

According to a first aspect, an intelligent lock is provided. The intelligent lock is mounted on a door body, and the intelligent lock includes: a processor; a memory, coupled to the processor; and a computer program, where the computer program is stored in the memory, and when the computer program is executed by the processor, the intelligent lock is enabled to perform the following steps: after a quantity of trigger events detected in a first period is greater than or equal to a first preset value, adding 1 to a quantity of suspected attacks, where an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1; obtaining a quantity of suspected attacks detected in a second period; and enabling a protection mode after the quantity of suspected attacks detected in the second period is greater than or equal to a second preset value.

For the intelligent lock in this application, it may be confirmed, based on a two-level detection mechanism, that the intelligent lock is subject to an electromagnetic attack (for example, a high-voltage electromagnetic attack). A first-level detection mechanism detects, in the first period, that the quantity of trigger events is greater than or equal to the first preset value, and considers that the intelligent lock is subject to a suspected attack. A second-level detection mechanism detects, in the second period, that the quantity of suspected attacks is greater than or equal to the second preset value, and confirms that the intelligent lock is subject to the electromagnetic attack (for example, the high-voltage electromagnetic attack), so that the intelligent lock enables the protection mode to perform active protection.

In a possible implementation, the intelligent lock further includes an optical sensor, coupled to the processor, where the optical sensor is located on an outer side of the door body, and the optical sensor is configured to output a light intensity value; and the intelligent lock further performs the following steps: obtaining a plurality of light intensity values within preset duration; and determining, based on the plurality of light intensity values, that an attack occurs, and enabling the protection mode. Based on such a design, the plurality of light intensity values may be further detected to determine that the intelligent lock is attacked.

In a possible implementation, the intelligent lock further performs the following step: after enabling the protection mode, exiting the protection mode after a third period. Based on such a design, time validity of the protection mode can be determined.

In a possible implementation, the determining, based on the plurality of light intensity values, that an attack occurs includes: recording a first quantity value plus 1 after a difference between any two detected adjacent light intensity values is greater than or equal to a difference preset threshold, where an initial value of the first quantity value is 0, a first quantity value recorded for the first time is the initial value plus 1, and a first quantity value recorded subsequently is a previous first quantity value plus 1; and after the first quantity value is greater than a preset quantity value threshold, determining that the attack occurs. Based on such a design, the difference between any two adjacent light intensity values may be determined to confirm whether the intelligent lock is attacked.

In a possible implementation, before the difference between any two adjacent light intensity values is detected, it is determined that the plurality of light intensity values are greater than or equal to a preset threshold. Based on such a design, the plurality of light intensity values being greater than or equal to the preset threshold may be determined as a condition for detecting the difference between any two adjacent light intensity values.

In a possible implementation, the determining, based on the plurality of light intensity values, that an attack occurs includes: after a difference between a largest light intensity value and a smallest light intensity value in the plurality of light intensity values is greater than or equal to a difference preset threshold, determining that the attack occurs. Based on such a design, the difference between the largest light intensity value and the smallest light intensity value in the plurality of light intensity values may be determined to confirm whether the intelligent lock is attacked.

In a possible implementation, before the difference between the largest light intensity value and the smallest light intensity value in the plurality of light intensity values is detected, it is determined that the plurality of light intensity values are greater than or equal to the preset threshold. Based on such a design, the plurality of light intensity values being greater than or equal to the preset threshold may be determined as a condition for detecting the difference between the largest light intensity value and the smallest light intensity value in the plurality of light intensity values.

In a possible implementation, the second period is greater than or equal to the first period; and the enabling the protection mode includes at least one of the following: skipping responding to an unlocking instruction, disabling a drive unit of the intelligent lock, and disabling a keyboard, an NFC module, a fingerprint module, or an optical sensor of the intelligent lock. Based on such a design, a peripheral device may be disabled to protect the intelligent lock.

In a possible implementation, the exiting the protection mode includes at least one of the following: responding to the unlocking instruction, enabling the drive unit of the intelligent lock, and enabling the keyboard, the NFC module, the fingerprint module, or the optical sensor of the intelligent lock. Based on such a design, the peripheral device may be re-enabled to enable the intelligent lock to recover normal working.

In a possible implementation, a timing start point of the preset duration includes one of the following: a timing start point of the first period, a timing end point of the first period, and a time point at which a trigger event is detected for the first time in the first period; and the trigger event may be detected with the keyboard, the NFC module, and the fingerprint module of the intelligent lock. Based on such a design, the timing point of the first period may be determined, and different types of trigger events are separately detected with the keyboard, the NFC module, and the fingerprint module.

According to a second aspect, an intelligent lock is provided. The intelligent lock is mounted on a door body, and the intelligent lock includes: a processor; a memory, coupled to the processor; an optical sensor, coupled to the processor, where the optical sensor is located on an outer side of the door body, and the optical sensor is configured to output a light intensity value; and a computer program, where the computer program is stored in the memory, and when the computer program is executed by the processor, the intelligent lock is enabled to perform the following steps: after a quantity of trigger events detected in a first period is greater than or equal to a first preset value, adding 1 to a quantity of suspected attacks, where an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1; obtaining a plurality of light intensity values within preset duration; and determining, based on the plurality of light intensity values, that an attack occurs, and enabling a protection mode.

For the intelligent lock in this application, it may be confirmed, based on a two-level detection mechanism, that the intelligent lock is subject to an electromagnetic attack (for example, a high-voltage electromagnetic attack). A first-level detection mechanism detects, in the first period, that the quantity of trigger events is greater than or equal to the first preset value, and considers that the intelligent lock is subject to a suspected attack. A second-level detection mechanism detects the plurality of light intensity values in the preset duration, and confirms that the intelligent lock is subject to the electromagnetic attack (for example, the high-voltage electromagnetic attack), so that the intelligent lock enables the protection mode to perform active protection.

In a possible implementation, the determining, based on the plurality of light intensity values, that an attack occurs includes: recording a first quantity value plus 1 after a difference between any two detected adjacent light intensity values is greater than or equal to a difference preset threshold, where an initial value of the first quantity value is 0, a first quantity value recorded for the first time is the initial value plus 1, and a first quantity value recorded subsequently is a previous first quantity value plus 1; and after the first quantity value is greater than a preset quantity value threshold, determining that the attack occurs. Based on such a design, the difference between any two adjacent light intensity values may be determined to confirm whether the intelligent lock is attacked.

In a possible implementation, before the difference between any two adjacent light intensity values is detected, it is determined that the plurality of light intensity values are greater than or equal to a preset threshold. Based on such a design, the plurality of light intensity values being greater than or equal to the preset threshold may be determined as a condition for detecting the difference between any two adjacent light intensity values.

In a possible implementation, the determining, based on the plurality of light intensity values, that an attack occurs includes: after a difference between a largest light intensity value and a smallest light intensity value in the plurality of light intensity values is greater than or equal to a difference preset threshold, determining that the attack occurs. Based on such a design, the difference between the largest light intensity value and the smallest light intensity value in the plurality of light intensity values may be determined to confirm whether the intelligent lock is attacked.

In a possible implementation, before the difference between the largest light intensity value and the smallest light intensity value in the plurality of light intensity values is detected, it is determined that the plurality of light intensity values are greater than or equal to the preset threshold. Based on such a design, the plurality of light intensity values being greater than or equal to the preset threshold may be determined as a condition for detecting the difference between the largest light intensity value and the smallest light intensity value in the plurality of light intensity values.

According to a third aspect, a protection method is provided, and applied to an intelligent lock. The intelligent lock is mounted on a door body, and the method includes: after a quantity of trigger events detected in a first period is greater than or equal to a first preset value, adding 1 to a quantity of suspected attacks, where an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1; obtaining a quantity of suspected attacks detected in a second period; and enabling a protection mode after the quantity of suspected attacks detected in the second period is greater than or equal to a second preset value.

In a possible implementation, the intelligent lock further includes an optical sensor, coupled to the processor, where the optical sensor is located on an outer side of the door body, and the optical sensor is configured to output a light intensity value. The method further includes: obtaining a plurality of light intensity values within preset duration; and determining, based on the plurality of light intensity values, that an attack occurs, and enabling the protection mode.

In a possible implementation, the method further includes: after enabling the protection mode, exiting the protection mode after a third period.

In a possible implementation, the determining, based on the plurality of light intensity values, that an attack occurs includes: recording a first quantity value plus 1 after a difference between any two detected adjacent light intensity values is greater than or equal to a difference preset threshold, where an initial value of the first quantity value is 0, a first quantity value recorded for the first time is the initial value plus 1, and a first quantity value recorded subsequently is a previous first quantity value plus 1; and after the first quantity value is greater than a preset quantity value threshold, determining that the attack occurs.

In a possible implementation, before the difference between any two adjacent light intensity values is detected, it is determined that the plurality of light intensity values are greater than or equal to a preset threshold.

In a possible implementation, the determining, based on the plurality of light intensity values, that an attack occurs includes: after a difference between a largest light intensity value and a smallest light intensity value in the plurality of light intensity values is greater than or equal to a difference preset threshold, determining that the attack occurs.

In a possible implementation, before the difference between the largest light intensity value and the smallest light intensity value in the plurality of light intensity values is detected, it is determined that the plurality of light intensity values are greater than or equal to the preset threshold.

In a possible implementation, the second period is greater than or equal to the first period; and the enabling the protection mode includes at least one of the following: skipping responding to an unlocking instruction, disabling a drive unit of the intelligent lock, and disabling a keyboard, an NFC module, a fingerprint module, or an optical sensor of the intelligent lock.

In a possible implementation, the exiting the protection mode includes at least one of the following: responding to the unlocking instruction, enabling the drive unit of the intelligent lock, and enabling the keyboard, the NFC module, the fingerprint module, or the optical sensor of the intelligent lock.

In a possible implementation, a timing start point of the preset duration includes one of the following: a timing start point of the first period, a timing end point of the first period, and a time point at which a trigger event is detected for the first time in the first period; and the trigger event may be detected with the keyboard, the NFC module, and the fingerprint module of the intelligent lock.

According to a fourth aspect, a protection method is provided, and applied to an intelligent lock. The intelligent lock is mounted on a door body; and the intelligent lock includes: a processor, and an optical sensor, coupled to the processor, where the optical sensor is located on an outer side of the door body, and the optical sensor is configured to output a light intensity value. The method includes: after a quantity of trigger events detected in a first period is greater than or equal to a first preset value, adding 1 to a quantity of suspected attacks, where an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1; obtaining a plurality of light intensity values within preset duration; and determining, based on the plurality of light intensity values, that an attack occurs, and enabling the protection mode.

In a possible implementation, the determining, based on the plurality of light intensity values, that an attack occurs includes: recording a first quantity value plus 1 after a difference between any two detected adjacent light intensity values is greater than or equal to a difference preset threshold, where an initial value of the first quantity value is 0, a first quantity value recorded for the first time is the initial value plus 1, and a first quantity value recorded subsequently is a previous first quantity value plus 1; and after the first quantity value is greater than a preset quantity value threshold, determining that the attack occurs.

In a possible implementation, before the difference between any two adjacent light intensity values is detected, it is determined that the plurality of light intensity values are greater than or equal to a preset threshold.

In a possible implementation, the determining, based on the plurality of light intensity values, that an attack occurs includes: after a difference between a largest light intensity value and a smallest light intensity value in the plurality of light intensity values is greater than or equal to a difference preset threshold, determining that the attack occurs.

In a possible implementation, before the difference between the largest light intensity value and the smallest light intensity value in the plurality of light intensity values is detected, it is determined that the plurality of light intensity values are greater than or equal to the preset threshold.

According to a fifth aspect, a computer-readable storage medium is provided, including a computer program. When the computer program is run on an intelligent lock, the intelligent lock is enabled to perform the methods according to the third aspect and any one of the implementations of the third aspect, and the fourth aspect and any one of the implementations of the fourth aspect.

According to a sixth aspect, a computer program product is provided. When the computer program product runs on an intelligent lock, the intelligent lock is enabled to perform the methods according to the third aspect and any one of the implementations of the third aspect, and the fourth aspect and any one of the implementations of the fourth aspect.

In addition, for technical effects brought by any possible design in the third aspect to the sixth aspect, refer to technical effects brought by different designs related to an intelligent lock. Details are not described herein again.

### BRIEF DESCRIPTION OF DRAWINGS

FIG. 1 is a diagram of an application scenario of an intelligent lock according to an embodiment of this application;
FIG. 2 is a schematic diagram of an intelligent lock according to an embodiment of this application;
FIG. 3 is a block diagram of a software structure of an intelligent lock according to an embodiment of this application;
FIG. 4 is a flowchart of a protection method according to an embodiment of this application;
FIG. 5 is a flowchart of a protection method according to another embodiment of this application;
FIG. 6 is a flowchart of a protection method according to still another embodiment of this application; and
FIG. 7 is a schematic diagram of a structure of an intelligent lock according to an embodiment of this application.

### Descriptions of reference numerals of main elements

| | |
|---|---|
| Intelligent lock | 100 |
| Door body | 200 |
| Outer side of the door | 201 |
| Inner side of the door | 202 |
| Processor | 110 |
| Lock body | 12 |
| Drive unit | 13 |
| Keyboard | 14 |
| NFC module | 15 |
| Fingerprint module | 16 |
| Optical sensor | 17 |
| Power management unit | 18 |
| Battery | 19 |
| Charging and discharging circuit | 20 |
| USB interface | 21 |
| Light emitting diode LED | 22 |
| Flash module | 23 |
| Button | 24 |
| Bluetooth module | 25 |
| Wireless communication module | 26 |
| Memory | 120 |

In the following specific implementations, this application is further described with reference to the accompanying drawings.

### DESCRIPTION OF EMBODIMENTS

To make the objective, technical solutions, and advantages of embodiments of this application clearer, the following clearly and completely describes the technical solutions of embodiments of this application with reference to the accompanying drawings in embodiments of this application. It is clear that the described embodiments are some of embodiments of this application rather than all of embodiments. Based on embodiments of this application, all other embodiments obtained by a person of ordinary skill in the art without creative efforts fall within the scope of protection of this application.

Terms used in the following embodiments are merely intended to describe specific embodiments, but are not intended to limit this application. As used in the specification and appended claims of this application, singular expressions "one", "a", "the", "the foregoing", "this", and "the one" are intended to further include expressions such as "one or more", unless otherwise specified in the context clearly. It should be further understood that, in the following embodiments of this application, "at least one" and "one or more" mean one, or two or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes a direct connection and an indirect connection, unless otherwise specified.

The following terms "first" and "second" are merely intended for a purpose of description, and shall not be understood as an indication or implication of relative importance or implicit indication of a quantity of indicated technical features. Therefore, a characteristic limited by "first" or "second" may explicitly or implicitly indicate that one or more characteristics are included.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

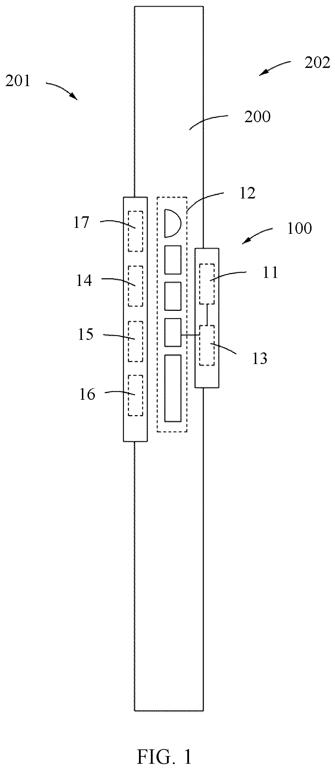

For example, FIG. 1 is a schematic diagram of an application scenario of an intelligent lock according to an embodiment of this application. In some embodiments, the intelligent lock may be mounted on a door body 200 to form an intelligent door lock, and is applicable to smart home. A protection method in this application is applied to the intelligent lock.

For clear and concise description of embodiments and implementations, a brief introduction of a conventional technology is provided: Smart home or home automation (smart home or home automation) is a residential platform, and integrates facilities related to home life by using an integrated cabling technology, a network communication technology, a security protection technology, an automatic control technology, and an audio and video technology, to construct an efficient management system for home facilities and home schedule affairs, improve home security, convenience, comfort, and art, and implement an environment-friendly and energy-saving living environment.

In some embodiments, as shown in FIG. 1, two opposite sides of the door body 200 may be respectively an outer side 201 of the door and an inner side 202 of the door. For example, the outer side 201 of the door may be outside the home, and the inner side 202 of the door may be inside the home. A keyboard 14, a near field communication (Near Field Communication, NFC) module 15, a fingerprint module 16, an optical sensor 17, and the like may be mounted and disposed on a surface that is of the door body 200 and that faces the outer side 201 of the door, and may be used by a user to perform an unlocking operation and detect an environment outside the door. A processor 110, a drive unit 13, and the like may be mounted and disposed on a side that is of the door body 200 and that faces the inner side 202 of the door, so as to protect these devices from being directly attacked or damaged from outside the door, thereby improving security of an intelligent lock 100. A lock body 12 may be mounted and disposed on a side surface of the door body 200, so that the lock body 12 can easily extend out or be accommodated in the door body 200, and a locked state and an open state can be switched.

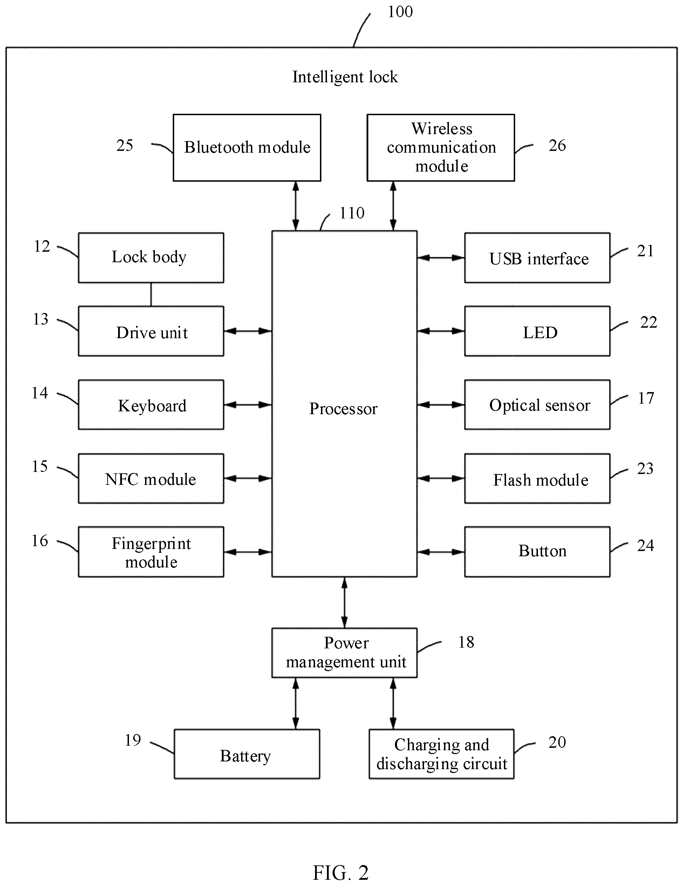

For example, FIG. 2 is a schematic diagram of an intelligent lock according to an embodiment of this application. As shown in FIG. 2, the intelligent lock 100 may include the processor 110, the lock body 12, the drive unit 13, the keyboard 14, the NFC module 15, the fingerprint module 16, and the optical sensor 17.

In some embodiments, the processor 110 may include but is not limited to a microcontroller unit (MicroController Unit, MCU). At least a memory, the microcontroller unit, and a counter (timer) are integrated on the processor 110. It may be understood that the processor 110 may further integrate functional modules and electronic components such as various types of interfaces, an analog to digital converter (Analog to Digital Converter, ADC), a universal asynchronous receiver/transmitter (Universal Asynchronous Receiver/Transmitter, UART), a programmable logic controller (Programmable Logic Controller, PLC), and direct memory access (Direct Memory Access, DMA).

In some embodiments, the memory is configured to store program code and various data. The memory may include a read-only memory (Read-Only Memory, ROM), a random access memory (Random Access Memory, RAM), a programmable read-only memory (Programmable Read-Only Memory, PROM), an erasable programmable read-only memory (Erasable Programmable Read-Only Memory, EPROM), a one time programmable read-only memory (One Time Programmable Read-Only Memory, OTPROM), an electronically-erasable programmable read-only memory (Electrically-Erasable Programmable Read-Only Memory, EEPROM), a compact disc read-only memory (Compact Disc Read-Only Memory, CD-ROM) or another optical disc memory, a magnetic disk memory, a magnetic tape memory, or any other computer-readable medium that can be used to carry or store data.

In some embodiments, the processor 110 may include an integrated circuit. For example, the processor 110 may include a single packaged integrated circuit, or may include a plurality of packaged integrated circuits that have a same function or different functions. The processor 110 may include one or more central processing units (Central Processing Units, CPUs), a microcontroller unit, a digital processing chip, a graphics processing unit, a combination of various control chips, and the like. At least one processor is a control core (Control Core) of the intelligent lock. The at least one processor runs or executes a program or a module stored in the memory and invokes data stored in the memory, to perform various functions of the intelligent lock and process data, for example, perform a data processing function.

The foregoing unit integrated in a form of a software functional module may be stored in a computer-readable storage medium. The software functional module is stored in a storage medium, and includes several instructions. When the instructions are executed, a computer device (which may be a personal computer, a terminal, a network device, or the like) or a processor (processor) is enabled to perform a part of a protection method in each embodiment of this application.

The memory stores a computer program, for example, program code, and the at least one processor may invoke the program code stored in the memory to perform a related function. In an embodiment of this application, the memory stores a plurality of instructions, and the plurality of instructions are executed by the at least one processor to implement the protection method.

The drive unit 13 is configured to drive the lock body 12 to lock or open the door body 200. In some embodiments, the drive unit 13 may include but is not limited to an electric motor. The electric motor is controlled by the processor 110, to drive physical movement of the lock body 12, so that the lock body 12 locks or opens the door body 200. For example, the drive unit 13 includes a motor.

The keyboard 14 may be mounted on the surface that is of the door body 200 and that faces the outer side 201 of the door, and is configured to detect a typing operation of the user. In some embodiments, the keyboard 14 may include but is not limited to a numeric keyboard, and is configured to detect the typing instruction of the user. The typing instruction may include a combination of numbers corresponding to the numeric keyboard, so as to form a password instruction for opening the lock body 12.

The NFC module 15 may be mounted on the surface that is of the door body 200 and that faces the outer side 201 of the door, and is configured to detect an NFC signal. In some embodiments, the NFC module 15 may be configured to detect an NFC signal of a paired NFC card, and the NFC signal of the paired NFC card may form a password instruction for opening the lock body 12.

The fingerprint module 16 may be mounted on the surface that is of the door body 200 and that faces the outer side 201 of the door, and is configured to detect a pressing fingerprint signal. In some embodiments, the fingerprint module 16 may be configured to detect a pre-recorded fingerprint signal, and the fingerprint signal may form a password instruction for opening the lock body 12.

The optical sensor 17 may be mounted on the surface that is of the door body 200 and that faces the outer side 201 of the door, and is configured to detect an optical signal on the outer side 201 of the door. In some embodiments, the optical sensor 17 may be configured to detect an ambient light intensity.

It may be understood that the intelligent lock 100 may form an unlocking instruction in any one of the following manners to open the lock body 12: detecting, by using the keyboard 14, a combination of numbers input by buttons, detecting, by using the NFC module 15, the paired NFC card, and detecting, by using the fingerprint module 16, the pre-recorded fingerprint signal.

In some embodiments, as shown in FIG. 2, the intelligent lock 100 may further include a power management unit 18, a battery 19, a charging and discharging circuit 20, a USB interface 21, an LED 22, a flash module 23, a button 24, a Bluetooth module 25, and a wireless communication module 26.

In some embodiments, the power management unit 18 may include a power management unit (Power Management Unit, PMU) chip, which may be configured to implement functions of converting, allocating, and detecting electric energy and other electric energy management in the intelligent lock 100. The battery 19 may be a repeatable charging and discharging battery. The battery 19 may supply power to components and modules of the intelligent lock 100 by using the power management unit 18. The charging and discharging circuit 20 may charge the battery 19 by using the power management unit 18. In some implementations, the charging and discharging circuit 20 may include a charging and discharging chip or a charging and discharging management chip. The USB interface 21 may be connected to an external device, so that the intelligent lock 100 exchanges data and a power signal with the external device. The LED 22 and the flash module 23 may be configured to indicate a working state of the intelligent lock 100. The button 24 may be configured to, but is not limited to, change the working state of the intelligent lock 100. For example, a user operation is provided through the button 24, to add a locked state of the lock body 12, for example, a secondary locked state. The Bluetooth module 25 may be configured to establish a Bluetooth connection to the external device, to implement Bluetooth transmission-based data exchange. In some embodiments, the Bluetooth module 25 may include but is not limited to Bluetooth low energy (or referred to as Bluetooth low energy, Bluetooth Low Energy, BLE), and has a feature of low energy. The wireless communication module 26 may be configured to establish a wireless communication connection to the external device, to implement wireless communication transmission-based data exchange. In some embodiments, the wireless communication module 26 may include but is not limited to a wireless fidelity (Wireless Fidelity, Wi-Fi) chip, and may establish a wireless communication connection, for example, a Wi-Fi connection, to the external device.

It may be understood that the intelligent lock 100 includes but is not limited to the foregoing electronic components and modules, and the structure schematically described in this embodiment does not constitute a specific limitation on the intelligent lock 100. In some embodiments, the intelligent lock 100 may further include other necessary electronic components, modules, circuits, and the like, and may include more or fewer components than those shown in the figure, or combine some components, or split some components, or have different component arrangements. This is not limited herein. The illustrated components may be implemented as hardware, software, or a combination of software and hardware.

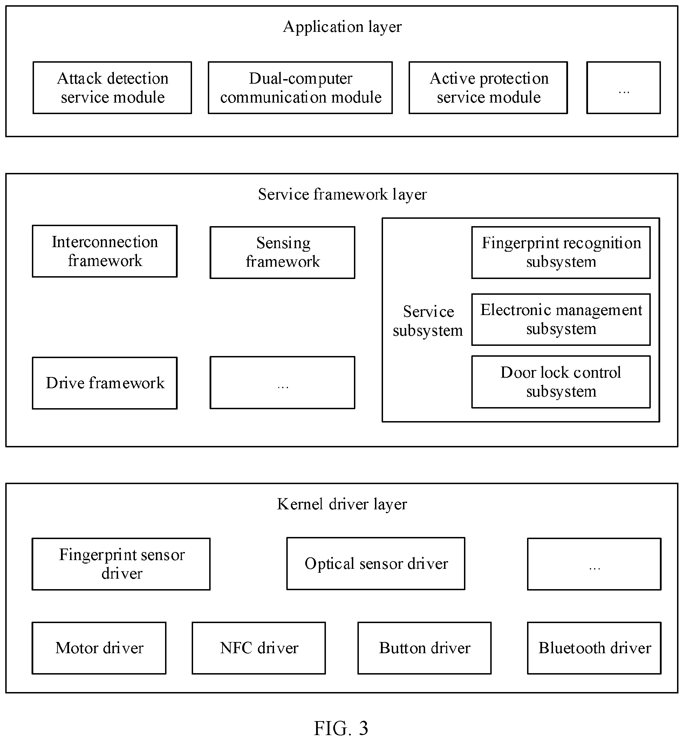

For example, FIG. 3 is a block diagram of a software structure of an intelligent lock 100 according to an embodiment of this application. As shown in FIG. 3, a layered architecture divides software into several layers, each with a clear role and division of labor. The layers communicate with each other through a software interface. In some embodiments, a software system is divided into three layers: an application layer, a service architecture layer, and a kernel driver layer from top to bottom.

The application layer may include an attack detection service module, a dual-computer communication module, an active protection service module, and the like. In some embodiments, the attack detection service module may be configured to detect and determine an electromagnetic attack (for example, a high-voltage electromagnetic attack) on the intelligent lock 100. The active protection service module may be configured to: when obtaining the electromagnetic attack (for example, the high-voltage electromagnetic attack) detected by the attack detection service module, control the intelligent lock 100 to enter a protection mode, and disable a related peripheral device. For example, the drive unit 13, the keyboard 14, the NFC module 15, the fingerprint module 16, the optical sensor 17, and the like are powered off, to protect the intelligent lock 100 and a related device. The dual-computer communication module may be configured to: establish a communication connection to the external device and implement a communication function.

The service framework layer provides an application programming interface (Application Programming Interface, API) and a programming framework for the service module of the application layer. The service framework layer includes some predefined functions. As shown in FIG. 3, the service framework layer may include an interconnection framework, a sensing framework, a drive framework, a service subsystem, and the like. The service subsystem may include a fingerprint recognition subsystem, a battery management subsystem, a door lock control subsystem, and the like. The drive framework may be configured to: provide a peripheral device (for example, the keyboard 14, the NFC module 15, the fingerprint module 16, and the optical sensor 17) control interface for the application layer, respond to an interrupt reported by a peripheral device driver, process and parse interrupt data, and report the interrupt data to a corresponding service module of the application layer, for example, the attack detection service module or the active protection service module. The interconnection framework may be configured to: provide a control interface for a service module (for example, the dual-computer communication module) of the application layer, and respond to and process data of the corresponding service module. The sensing framework may be configured to: respond to and process data of a corresponding peripheral device (for example, the NFC module 15 or the optical sensor 17), and report the data to a corresponding service module of the application layer, for example, the attack detection service module or the active protection service module.

The fingerprint recognition subsystem may be configured to: respond to and process data of a corresponding peripheral device (for example, the fingerprint module 16), and report the data to a corresponding service module of the application layer, for example, the attack detection service module or the active protection service module. The door lock control subsystem may be configured to: respond to and process data of a corresponding peripheral device (for example, the drive unit 13), and report the data to a corresponding service module of the application layer, for example, the attack detection service module or the active protection service module. The battery management subsystem may be configured to: respond to and process data of a corresponding peripheral device (for example, the power management unit 18), and report the data to a corresponding service module of the application layer, for example, the attack detection service module or the active protection service module.

A kernel layer is a layer between hardware and software. The kernel layer includes at least a fingerprint sensor driver, an optical sensor driver, a motor driver, an NFC driver, a button driver, a Bluetooth driver, and the like. The fingerprint sensor driver may correspondingly drive and control the fingerprint module 16. The optical sensor driver may correspondingly drive and control the optical sensor 17. The motor driver may correspondingly drive and control the drive unit 13. The NFC driver may correspondingly drive and control the NFC module 15. The button driver may correspondingly drive and control the keyboard 14. The Bluetooth driver may correspondingly drive and control the Bluetooth module 25. In some embodiments, when the Bluetooth module 25 includes Bluetooth low energy (BLE), the Bluetooth driver may include a corresponding BLE driver, and may correspondingly drive and control the BLE.

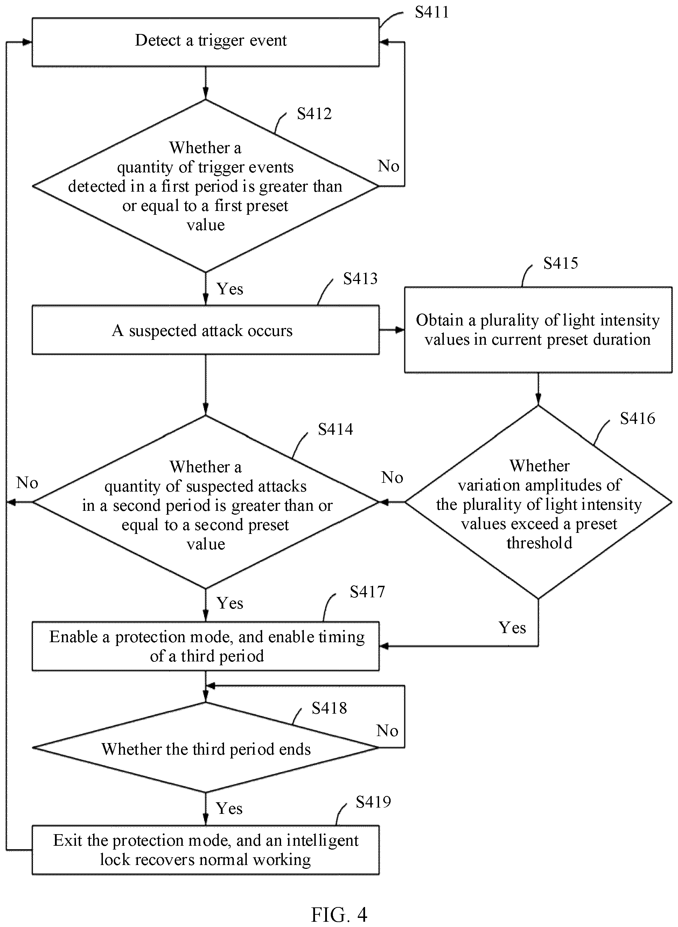

For example, FIG. 4 is a flowchart of a protection method according to an embodiment of this application. The protection method is applied to the intelligent lock 100. For example, the protection method may include the following steps.

S411: Detect a trigger event.

Optionally, the keyboard 14, the NFC module 15, and the fingerprint module 16 separately detect a trigger event. In some embodiments, when detecting a button interrupt signal, the keyboard 14 may determine that the trigger event is a button trigger event. When detecting an NFC signal, the NFC module 15 may determine that the trigger event is an NFC trigger event. When detecting a touch fingerprint signal, the fingerprint module 16 may determine that the trigger event is a fingerprint trigger event.

S412: Determine whether a quantity of trigger events detected in a first period T1 is greater than or equal to a first preset value N1.

In some embodiments, the keyboard 14, the NFC module 15, and the fingerprint module 16 may separately send, to a processor 110, trigger events detected by the keyboard 14, the NFC module 15, and the fingerprint module 16. For example, the first period T1 may be 30 milliseconds, and the first preset value N1 may be 3. Specifically, the processor 110 determines whether an accumulated quantity of trigger events detected by the keyboard 14, the NFC module 15, and the fingerprint module 16 in the first period T1 is greater than or equal to the first preset value N1.

In some embodiments, if the keyboard 14 detects one button trigger event, the NFC module 15 detects one NFC trigger event, and the fingerprint module 16 detects one fingerprint trigger event in the first period T1, the processor 110 determines that the quantity of trigger events detected in the first period T1 is three, so that a condition that the quantity of trigger events is greater than or equal to the first preset value N1 is met.

In some embodiments, if the keyboard 14 detects two button trigger events and the NFC module 15 detects one NFC trigger event in the first period T1, the processor 110 determines that the quantity of trigger events detected in the first period T1 is three, so that the condition that the quantity of trigger events is greater than or equal to the first preset value N1 is met.

When it is determined that the quantity of trigger events detected in the first period T1 is greater than or equal to the first preset value N1, S413 is performed; or when it is determined that the quantity of trigger events detected in the first period T1 is less than the first preset value N1, S411 is performed.

S413: A suspected attack occurs.

Optionally, the intelligent lock 100 (which may be specifically the processor 110) considers, based on the foregoing determining condition, that the intelligent lock 100 is subject to a suspected attack (for example, there is a suspected attack event). In some embodiments, the suspected attack may include, but is not limited to, an electromagnetic wave attack.

Optionally, the intelligent lock 100 may collect an input password instruction by using at least one of the keyboard 14, the NFC module 15, and the fingerprint module 16, for comparison and verification of unlocking. Optionally, the first period T1 may be set to a relatively short time period (for example, 30 milliseconds). Generally, when the user performs a normal unlocking input, duration (for example, one second or several seconds) of an operation performed on at least one of the keyboard 14, the NFC module 15, and the fingerprint module 16 is greater than the first period T1. In this way, the suspected attack can be effectively distinguished from the normal unlocking input of the user, so that cases of misidentification are reduced or even no misidentification occurs, thereby avoiding or reducing unnecessary processing. For example, duration of a password input operation performed by the user on the keyboard 14 is generally five seconds, which is greater than the first period T1 (for example, 30 milliseconds). In addition, it is assumed that a password for unlocking has M bits in total. When the user normally inputs the password for unlocking, an interval between a time at which an ith password bit is input and a time at which an (i+1)th password bit is input (i is any number greater than or equal to 1 and less than or equal to M) is generally greater than the first period T1. Therefore, a case in which the intelligent lock 100 mistakenly identifies the normal unlocking input of the user as a suspected attack does not occur. In addition, if the intelligent lock 100 continuously detects a plurality of (for example, three or more) trigger events in the first period T1 (for example, 30 milliseconds), the intelligent lock 100 considers that the intelligent lock 100 is subject to a suspected attack, for example, a suspected electromagnetic wave attack. In conclusion, the intelligent lock 100 can accurately identify and distinguish between the suspected attack and the normal unlocking input.

For example, S413 is an optional step, and related execution of S413 may be replaced with execution of S414 and S415.

S414: Determine whether a quantity of suspected attacks in a second period T2 is greater than or equal to a second preset value N2.

Optionally, in some embodiments, the second period T2 may be set to one second, and the second preset value N2 may be set to 2. The second period T2 may be set to other duration. The second preset value N2 may be set to another value. This is not limited in this application.

It may be understood that, if the quantity of suspected attacks detected in the second period T2 (for example, one second) is at least two, the intelligent lock considers that the intelligent lock is subject to an illegal attack, and the intelligent lock needs to be protected. When the intelligent lock determines that the quantity of suspected attack events detected in the second period T2 is greater than or equal to the second preset value N2, S417 is performed. When the intelligent lock determines that the quantity of suspected attack events detected in the second period T2 is less than the second preset value N2, return to perform S411.

Optionally, the second period is greater than, less than, or equal to the first period.

Optionally, the second preset value is greater than, less than, or equal to the first preset value.

S415: Obtain a plurality of light intensity values in current preset duration.

For example, a light intensity value of current ambient light at the outer side 201 of the door is obtained by using the optical sensor 17 in preset duration (for example, 0.5 second), and is sent to the processor 110. After S413 or S412, S414 and S415 are performed synchronously or simultaneously, and the two branches are performed synchronously or simultaneously for further detection.

Optionally, the preset duration may be set or adjusted by the user, may be set by a manufacturer before delivery, or may be updated and set by a manufacturer when software is upgraded.

For example, a timing start point of the current preset duration may be a timing start point of the first period, may be a timing end point of the first period, or may be a time point at which a trigger event is detected for the first time in the first period. This is not limited in this application.

S416: Determine whether variation amplitudes of the plurality of light intensity values exceed a preset threshold.

For example, the intelligent lock 100 (or the processor 110) may determine whether the variation amplitudes of the plurality of light intensity values (for example, a variation amplitude between a largest light intensity value and a smallest light intensity value) are greater than or equal to a preset threshold L1. In some embodiments, the preset threshold L1 is a preset light intensity threshold.

For example, the intelligent lock 100 may determine whether a variation amplitude of any two detected adjacent light intensity values is greater than or equal to a difference preset threshold L2, so as to determine the variation amplitudes of the plurality of light intensity values.

In some embodiments, the optical sensor 17 continuously detects the plurality of light intensity values (for example, five light intensity values) in the preset duration. The intelligent lock 100 (or the processor 110) determines whether a difference between any two detected adjacent light intensity values is greater than or equal to the difference preset threshold L2. If one difference is greater than or equal, a first quantity value plus 1 is recorded, where an initial value of the first quantity value is 0, a first quantity value recorded for the first time is the initial value plus 1, and a first quantity value recorded subsequently is a previous first quantity value plus 1. If a half (which may be referred to as a preset quantity value threshold) or more of differences are greater than or equal to the difference preset threshold L2, the intelligent lock 100 (or the processor 110) determines that the variation amplitudes of the plurality of light intensity values exceed the preset threshold, and confirms that the intelligent lock 100 is subject to an illegal attack (for example, a high-voltage electromagnetic attack).

For example, five light intensity values are detected continuously in the preset duration, and may be referred to as a first light intensity value, a second light intensity value, a third light intensity value, a fourth light intensity value, and a fifth light intensity value. There are a total of four differences between adjacent light intensity values, and the differences may be referred to as a first difference between the first light intensity value and the second light intensity value, a second difference between the second light intensity value and the third light intensity value, a third difference between the third light intensity value and the fourth light intensity value, and a fourth difference between the fourth light intensity value and the fifth light intensity value. If there are at least two differences (especially adjacent differences, for example, the first difference and the second difference) in the four differences between adjacent light intensity values (that is, the first difference, the second difference, the third difference, and the fourth difference) are greater than or equal to the difference preset threshold L2, the intelligent lock 100 (or the processor 110) considers that the intelligent lock 100 is subject to an electromagnetic attack (for example, the high-voltage electromagnetic attack). Generally, the electromagnetic attack (for example, a high-voltage electromagnetic attack initiated by an electric baton) generates a flash. For example, a plurality of flashes usually generate a plurality of fluctuant light intensity values, and the plurality of flashes fluctuate with a strong light intensity value and a weak light intensity value alternating. However, the plurality of light intensity values may be greater than or equal to the preset threshold L1, and the difference between two adjacent light intensity values may be greater than or equal to the difference preset threshold L2 (for example, the first difference is greater than or equal to the difference preset threshold L2).

Optionally, before the intelligent lock detects whether the difference between any two adjacent light intensity values is greater than or equal to the difference preset threshold L2, the intelligent lock 100 may further first detect that the plurality of light intensity values are greater than or equal to the preset threshold L1.

Therefore, in some embodiments, when at least a half of the differences between any two adjacent light intensity values detected by the intelligent lock 100 (or the processor 110) are greater than or equal to the difference preset threshold L2, the intelligent lock (or the processor 110) may determine that the variation amplitudes of the plurality of light intensity values exceed the preset threshold, and confirm that the intelligent lock 100 is subject to the electromagnetic attack (for example, the high-voltage electromagnetic attack). It may be understood that, when it is determined that at least a half of the differences between any two detected adjacent light intensity values are less than the difference preset threshold L2, the intelligent lock 100 (or the processor 110) determines that the variation amplitudes of the plurality of light intensity values do not exceed the preset threshold, and considers that the intelligent lock 100 is not subj ect to the electromagnetic attack (for example, not subject to the high-voltage electromagnetic attack). For example, in a scenario in which the intelligent lock 100 is constantly irradiated by strong light, light intensity values that continuously fluctuate generally do not occur when the intelligent lock 100 is directly irradiated by the strong light.

In some embodiments, the optical sensor 17 continuously detects the plurality of light intensity values (for example, five light intensity values), and the intelligent lock 100 (or the processor 110) determines whether the difference between the largest light intensity value and the smallest light intensity value in the plurality of light intensity values (for example, if the first light intensity value is the largest light intensity value, and the third light intensity value is the smallest light intensity value, the difference between the first light intensity value and the third light intensity value is determined) is greater than or equal to the difference preset threshold L2. If the difference is greater than or equal to the difference preset threshold L2, the intelligent lock 100 (or the processor 110) determines that the variation amplitudes of the plurality of light intensity values exceed the preset threshold, and considers that the intelligent lock 100 is subject to the electromagnetic attack (for example, the high-voltage electromagnetic attack). If the difference is less than the difference preset threshold L2, the intelligent lock 100 (or the processor 110) determines that the variation amplitudes of the plurality of light intensity values do not exceed the preset threshold, and considers that the intelligent lock 100 is not subject to the electromagnetic attack (for example, not subject to the high-voltage electromagnetic attack).

When the variation amplitudes of the plurality of detected light intensity values exceed the preset threshold, S417 is performed; or when the variation amplitudes of the plurality of detected light intensity values do not exceed the preset threshold, S414 is performed.

Optionally, before the intelligent lock determines whether the difference between the largest light intensity value and the smallest light intensity value in the plurality of light intensity values is greater than or equal to the difference preset threshold L2, the intelligent lock 100 may further first detect that the plurality of light intensity values are greater than or equal to the preset threshold L1.

S417: Enable a protection mode, and enable timing of a third period T3.

Specifically, the intelligent lock 100 (or the processor 110) enables the protection mode, and enables timing of the third period T3.

In some embodiments, enabling the protection mode includes: disabling the drive unit 13, to prevent an interference signal caused by the electromagnetic attack (for example, the high-voltage electromagnetic attack) from mistakenly triggering the drive unit 13 to open the lock body 12.

Further, enabling the protection mode further includes: disabling peripheral devices of the processor such as the keyboard 14, the NFC module 15, the fingerprint module 16, and the optical sensor 17, to prevent damage to the peripheral devices.

Further, enabling the protection mode further includes: The processor 110 may not respond to any password instruction, and does not respond to detection signals of the keyboard 14, the NFC module 15, the fingerprint module 16, and the optical sensor 17. That is, the processor 110 does not respond to the unlocking instruction.

In some embodiments, disabling the keyboard 14, the NFC module 15, the fingerprint module 16, and the optical sensor 17 may mean stopping supplying power to the keyboard 14, the NFC module 15, the fingerprint module 16, and the optical sensor 17.

In some embodiments, the third period T3 may include one of pieces of duration such as three seconds and five seconds. The third period T3 may alternatively be any other duration. This is not limited in this application.

Optionally, a timing manner may be replaced, and a timing manner (for example, timing starting from 0) is used instead of a countdown manner of the third period.

S418: Determine whether the third period T3 ends.

If the timing of the third period T3 does not end, S418 continues to be performed, and a protection mode state is still maintained; or if the timing of the third period T3 ends, S419 is performed.

Optionally, in S417, "enable timing of the third period T3" is replaced with "enable timing". In other words, the "countdown" manner is replaced with the "timing" manner. In this case, whether duration of timing is greater than or equal to the third period needs to be determined. After the duration of the timing is greater than or equal to the third period, S419 is performed; or if the duration of the timing is less than the third period, S418 continues to be performed.

S419: Exit the protection mode, and the intelligent lock 100 recovers normal working.

The intelligent lock 100 (or the processor 110) exits the protection mode, the intelligent lock 100 recovers normal working, and the intelligent lock 100 may return to perform S411 again. In some embodiments, after exiting the protection mode, power supply to the keyboard 14, the NFC module 15, the fingerprint module 16, and the optical sensor 17 is recovered, and the drive unit 13 is re-enabled. The processor 110 recovers to respond to the password instruction and the detection signal.

Based on the protection method in this embodiment of this application, it is confirmed, based on a two-level detection mechanism, that the intelligent lock 100 is subject to the electromagnetic attack (for example, the high-voltage electromagnetic attack). A first-level detection mechanism detects, in the first period, that a quantity of trigger events (for example, the trigger event includes at least one of the button trigger event, the NFC trigger event, and the fingerprint trigger event) is greater than or equal to the first preset value, and considers that the intelligent lock 100 is subject to a suspected attack. In preset duration in which the first-level detection mechanism detects the suspected attack, a second-level detection mechanism obtains a plurality of light intensity values, and detects that variation amplitudes of the plurality of light intensity values exceed the preset threshold, and confirms that the intelligent lock 100 is subject to the electromagnetic attack (for example, the high-voltage electromagnetic attack). After it is confirmed that the intelligent lock 100 (or the processor 110) is subject to the electromagnetic attack, the intelligent lock 100 (or the processor 110) enters the protection mode to perform active protection, and does not respond to an external interrupt, so as to prevent the lock from being opened mistakenly, and simultaneously protect each peripheral device from being damaged, thereby greatly improving a security coefficient of the intelligent lock 100.

It should be noted that the two-level detection mechanism is merely an example, and is not intended to limit the scope of this application. For example, more detection mechanisms such as a three-level detection mechanism and a four-level detection mechanism may be used.

It should be noted that a sequence of steps in the flowchart shown in FIG. 4 may be changed, and S413 is an optional step, and may be omitted. Related execution of S413 may be replaced with execution of S414 and S415. After S413 or after S412, S414 and S415 are performed synchronously or simultaneously, and the two branches are performed synchronously or simultaneously for further detection. Alternatively, S415 may be separately performed, and only one branch is performed for further detection, and in this case, S414 is an optional step, and may be omitted.

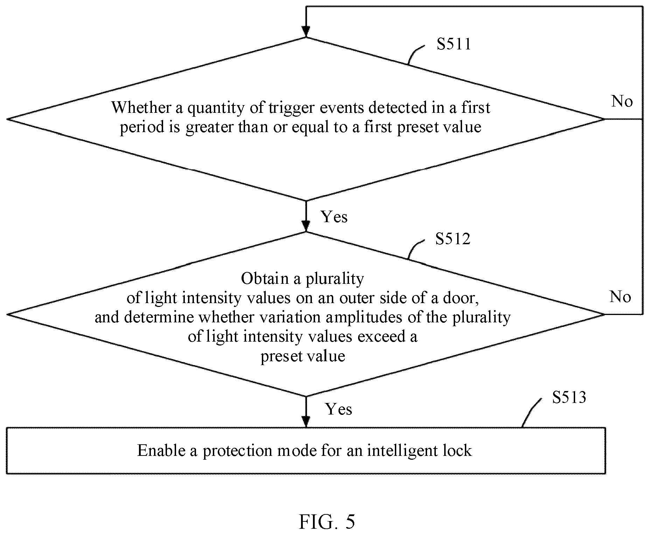

For example, FIG. 5 is a possible flowchart of a protection method according to another embodiment of this application. The protection method is applied to the intelligent lock 100. For example, the protection method may include the following steps.

S511: Determine whether a quantity of trigger events detected in a first period T1 is greater than or equal to a first preset value N1.

In some embodiments, the keyboard 14, the NFC module 15, and the fingerprint module 16 separately detect trigger events and send the trigger events to the processor 110, and the processor 110 determines whether the quantity of trigger events detected in the first period T1 is greater than or equal to the first preset value N1. In some embodiments, for an implementation process of S511, refer to the foregoing S411 and S412. When the quantity of trigger events detected in the first period T1 is greater than or equal to the first preset value N1, S512 is performed; or when the quantity of trigger events detected in the first period T1 is less than the first preset value N1, return to perform S511.

S512: Obtain a plurality of light intensity values on the outer side 201 of the door, and determine whether variation amplitudes of the plurality of light intensity values exceed a preset threshold.

In some embodiments, the optical sensor 17 is located on the outer side of the door. Within preset duration, the optical sensor 17 continuously detects the plurality of light intensity values on the outer side 201 of the door, and determines whether the variation amplitudes of the plurality of light intensity values exceed the preset threshold.

In some embodiments, some optical sensors 17 are located on the outer side of the door, and some optical sensors 17 are located on the inner side of the door. Within the preset duration, the optical sensor 17 located on the outer side of the door continuously monitors the plurality of light intensity values on the outer side 201 of the door, and determines whether the variation amplitudes of the plurality of light intensity values exceed the preset threshold.

In some embodiments, for an implementation process of S512, refer to the foregoing S415 and S416.

When it is determined that the variation amplitudes of the plurality of light intensity values exceed the preset threshold, S513 is performed; or when the variation amplitudes of the plurality of light intensity values do not exceed the preset threshold, return to perform S511.

S513: Enable a protection mode for the intelligent lock 100.

In some embodiments, the intelligent lock 100 (or the processor 110) enables the protection mode for the intelligent lock 100. In some embodiments, for an implementation process of S513, refer to the foregoing S417.

Based on the protection method in this embodiment of this application, an active protection mechanism for an electromagnetic attack (for example, a high-voltage electromagnetic attack) is used, so that the intelligent lock 100 effectively detects the electromagnetic attack (for example, the high-voltage electromagnetic attack) and performs targeted protection, thereby improving security of the intelligent lock 100.

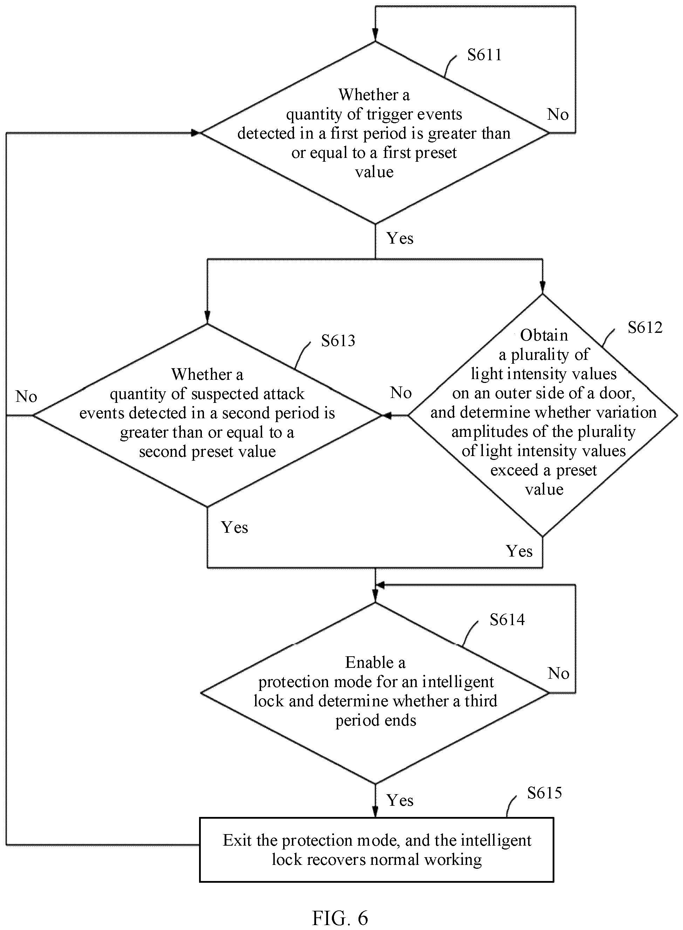

For example, FIG. 6 is a possible flowchart of a protection method according to still another embodiment of this application. The protection method is applied to the intelligent lock 100. For example, the protection method may include the following steps.

S611: Determine whether a quantity of trigger events detected in a first period T1 is greater than or equal to a first preset value N1.

In some embodiments, the keyboard 14, the NFC module 15, and the fingerprint module 16 separately detect trigger events and send the trigger events to the processor 110, and the processor 110 determines whether the quantity of trigger events detected in the first period T1 is greater than or equal to the first preset value N1. In some embodiments, for an implementation process of S611, refer to the foregoing S411 and S412. When the quantity of trigger events detected in the first period T1 is greater than or equal to the first preset value N1, S612 and S613 are performed synchronously or simultaneously, and the two branches are performed synchronously or simultaneously for further detection; or when the quantity of trigger events detected in the first period T1 is less than the first preset value N1, return to perform S611.

S612: Obtain a plurality of light intensity values on the outer side of the door, and determine whether variation amplitudes of the plurality of light intensity values exceed a preset value.

In some embodiments, the optical sensor 17 continuously detects the plurality of light intensity values on the outer side 201 of the door, and determines whether the variation amplitudes of the plurality of light intensity values exceed the preset value. In some embodiments, for an implementation process of S612, refer to the foregoing S415 and S416.

When it is determined that the variation amplitudes of the plurality of light intensity values exceed the preset threshold, S614 is performed; or when the variation amplitudes of the plurality of light intensity values do not exceed the preset threshold, S613 is performed.

S613: Determine whether a quantity of suspected attack events detected in a second period T2 is greater than or equal to a second preset value N2.

In some embodiments, the processor 110 determines whether the quantity of suspected attack events detected in the second period T2 is greater than or equal to the second preset value N2. In some embodiments, for an implementation process of S613, refer to the foregoing S414.

When it is determined that the quantity of suspected attack events detected in the second period T2 is greater than or equal to the second preset value N2, S614 is performed; or when the quantity of suspected attack events detected in the second period T2 is less than the second preset value N2, return to perform S611.

S614: Enable a protection mode for the intelligent lock 100 and determine whether a third period T3 ends.

In some embodiments, the processor 110 enables the protection mode for the intelligent lock 100 and enables timing of the third period T3. In some embodiments, for an implementation process of S614, refer to the foregoing S417 and S418.

When it is determined that the third period T3 ends, S615 is performed; or when it is determined that the third period T3 does not end, return to continue to perform S614.

Alternatively, a "countdown" manner may be used, or a "timing" manner may be used.

S615: Exit the protection mode, and the intelligent lock 100 recovers normal working.

In some embodiments, the processor 110 ends the protection mode, the intelligent lock 100 recovers normal working, and the intelligent lock 100 may return to perform S611 again. In some embodiments, for an implementation process of S615, refer to the foregoing S419.

It should be noted that a sequence of steps in the flowchart shown in FIG. 6 may be changed.

After S611, S612 and S613 are performed synchronously or simultaneously, and the two branches are performed synchronously or simultaneously for further detection. Alternatively, S612 may be separately performed, only one branch is performed for further detection, and in this case, S613 is an optional step, and may be omitted or reserved. When S613 is omitted, after S612, when a determining result of S612 is no, S611 is performed; or when the determining result of S612 is yes, 614 is performed. When S613 is reserved, after S612, when the determining result of S612 is no, S613 is performed; or when the determining result of S612 is yes, S614 is performed.

Based on the protection method in this embodiment of this application, detecting a variation characteristic of a trigger event when the intelligent lock 100 is subject to the electromagnetic attack (for example, the high-voltage electromagnetic attack) is first-level detection, and detecting variation amplitudes of light intensities during the attack is second-level detection, to determine whether the intelligent lock 100 is subject to the electromagnetic attack (for example, the high-voltage electromagnetic attack). When it is determined that the intelligent lock 100 is subject to the electromagnetic attack (for example, the high-voltage electromagnetic attack), the intelligent lock 100 is controlled to enter the protection mode to perform active protection, and does not respond to an external interrupt, so as to prevent the lock from being opened mistakenly, and simultaneously protect each peripheral device from being damaged, thereby greatly improving a security coefficient of the intelligent lock 100.

It should be noted that any step and any technical feature in the foregoing embodiments of this application may be freely and randomly combined. The combined technical solutions also fall within the scope of this application.

It may be understood that, to implement the foregoing functions, the electronic device includes a corresponding hardware structure and/or software module for performing each of the functions. A person skilled in the art should be easily aware that, with reference to units and algorithm steps of the examples described in embodiments disclosed in this specification, embodiments of this application can be implemented by hardware or a combination of hardware and computer software. Whether a function is performed by hardware or computer software-driven hardware depends on particular applications and design constraints of the technical solutions. A person skilled in the art may use different methods to implement the described functions for each particular application, but it should not be considered that this implementation goes beyond the scope of embodiments of this application.

In embodiments of this application, division into functional modules may be performed on the foregoing electronic device based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

In the technical solutions of embodiments of this application, not only the optical sensor may be configured to: obtain the light intensity values, and use the light intensity values as a determining condition or one of determining conditions of subsequent variation amplitudes of the light intensity values, but also another sensor may be used for determining. A specific type of the sensor is not limited in this application.

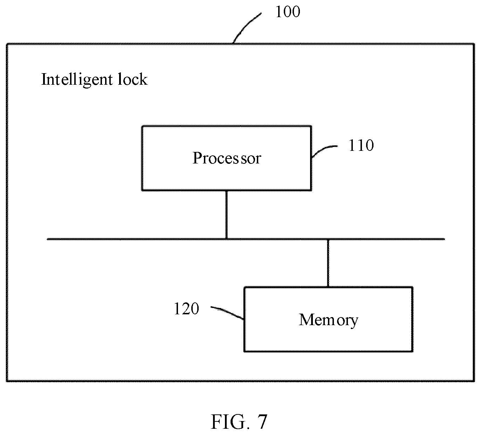

In an example, FIG. 7 is a schematic diagram of a possible structure of the intelligent lock in the foregoing embodiments. As shown in FIG. 7, the intelligent lock 100 includes a processor 110 and a memory 120. The processor 110 is coupled to the memory 120. Coupling in embodiments of this application may be a communication connection, an electrical connection, or another form of connection. Specifically, the memory 120 is configured to store a computer program. The processor 110 is configured to invoke the computer program stored in the memory 120, so that the intelligent lock 100 performs the steps performed by the intelligent lock in the methods provided in embodiments of this application. For related procedures, refer to the foregoing description. Details are not described herein again.

In some embodiments, the intelligent lock 100 may further include a display. When the display has a touch function, the display is also referred to as a touch display. An operation on the touch display may be implemented through a virtual key. When the display has no touch function, the display is also referred to as a non-touch display. An operation on the non-touch display may be implemented through a physical button.

This application provides a computer program product. When the computer program product runs on an intelligent lock, the intelligent lock is enabled to perform the steps performed by the intelligent lock in the protection methods provided in embodiments of this application.

This application provides a computer-readable storage medium, including a computer program. When the computer program is run on an intelligent lock, the intelligent lock is enabled to perform the steps performed by the intelligent lock in the protection methods provided in embodiments of this application.

Optionally, the intelligent lock 100 may not include a display.

A person skilled in the art may clearly understand that embodiments of this application may be implemented by hardware, or by hardware and software. When embodiments of this application are implemented by hardware and software, the foregoing functions may be stored in a computer-readable medium. Based on such an understanding, the technical solutions of embodiments of this application essentially, or the part contributing to the conventional technology, or all or some of the technical solutions may be implemented in the form of a software product. The computer software product is stored in a storage medium and includes several computer programs. When the computer programs are used, a computer device (which may be a personal computer, a server, or a network device) or a processor is enabled to perform all or some of the steps of the methods described in embodiments of this application. The storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims of this application.

## Claims

1. An intelligent lock, wherein the intelligent lock is mounted on a door body, and the intelligent lock comprises:
a processor;
a memory, coupled to the processor; and
a computer program, wherein the computer program is stored in the memory, and when the computer program is executed by the processor, the intelligent lock is enabled to perform the following steps:
after a quantity of trigger events detected in a first period is greater than or equal to a first preset value, adding 1 to a quantity of suspected attacks, wherein an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1;
obtaining a quantity of suspected attacks detected in a second period; and
enabling a protection mode after the quantity of suspected attacks detected in the second period is greater than or equal to a second preset value.

2. The intelligent lock according to claim 1, wherein the intelligent lock further comprises:
an optical sensor, coupled to the processor, wherein the optical sensor is located on an outer side of the door body, and the optical sensor is configured to output a light intensity value; and
the intelligent lock further performs the following steps:
obtaining a plurality of light intensity values within preset duration; and
determining, based on the plurality of light intensity values, that an attack occurs, and enabling the protection mode.

3. The intelligent lock according to claim 1 or 2, wherein the intelligent lock further performs the following step:
after enabling the protection mode, exiting the protection mode after a third period.

4. The intelligent lock according to any one of claims 1 to 3, wherein
the determining, based on the plurality of light intensity values, that an attack occurs comprises:
recording a first quantity value plus 1 after a difference between any two detected adjacent light intensity values is greater than or equal to a difference preset threshold, wherein an initial value of the first quantity value is 0, a first quantity value recorded for the first time is the initial value plus 1, and a first quantity value recorded subsequently is a previous first quantity value plus 1; and
after the first quantity value is greater than a preset quantity value threshold, determining that the attack occurs.

5. The intelligent lock according to claim 4, wherein
before the difference between any two adjacent light intensity values is detected, it is determined that the plurality of light intensity values are greater than or equal to a preset threshold.

6. The intelligent lock according to any one of claims 1 to 3, wherein
the determining, based on the plurality of light intensity values, that an attack occurs comprises:
after a difference between a largest light intensity value and a smallest light intensity value in the plurality of light intensity values is greater than or equal to a difference preset threshold, determining that the attack occurs.

7. The intelligent lock according to claim 6, wherein
before the difference between the largest light intensity value and the smallest light intensity value in the plurality of light intensity values is detected, it is determined that the plurality of light intensity values are greater than or equal to a preset threshold.

8. The intelligent lock according to any one of claims 1 to 7, wherein
the second period is greater than or equal to the first period; and
the enabling the protection mode comprises at least one of the following: skipping responding to an unlocking instruction, disabling a drive unit of the intelligent lock, and disabling a keyboard, an NFC module, a fingerprint module, or an optical sensor of the intelligent lock.

9. The intelligent lock according to claim 8, wherein
the exiting the protection mode comprises at least one of the following: responding to the unlocking instruction, enabling the drive unit of the intelligent lock, and enabling the keyboard, the NFC module, the fingerprint module, or the optical sensor of the intelligent lock.

10. The intelligent lock according to any one of claims 1 to 9, wherein
a timing start point of the preset duration comprises one of the following: a timing start point of the first period, a timing end point of the first period, and a time point at which a trigger event is detected for the first time in the first period; and
the trigger event may be detected with the keyboard, the NFC module, and the fingerprint module of the intelligent lock.

11. An intelligent lock, wherein the intelligent lock is mounted on a door body, and the intelligent lock comprises:
a processor;
a memory, coupled to the processor;
an optical sensor, coupled to the processor, wherein the optical sensor is located on an outer side of the door body, and the optical sensor is configured to output a light intensity value; and
a computer program, wherein the computer program is stored in the memory, and when the computer program is executed by the processor, the intelligent lock is enabled to perform the following steps:
after a quantity of trigger events detected in a first period is greater than or equal to a first preset value, adding 1 to a quantity of suspected attacks, wherein an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1;
obtaining a plurality of light intensity values within preset duration; and
determining, based on the plurality of light intensity values, that an attack occurs, and enabling a protection mode.

12. The intelligent lock according to claim 11, wherein
the determining, based on the plurality of light intensity values, that an attack occurs comprises:
recording a first quantity value plus 1 after a difference between any two detected adjacent light intensity values is greater than or equal to a difference preset threshold, wherein an initial value of the first quantity value is 0, a first quantity value recorded for the first time is the initial value plus 1, and a first quantity value recorded subsequently is a previous first quantity value plus 1; and
after the first quantity value is greater than a preset quantity value threshold, determining that the attack occurs.

13. The intelligent lock according to claim 11, wherein
the determining, based on the plurality of light intensity values, that an attack occurs comprises:
after a difference between a largest light intensity value and a smallest light intensity value in the plurality of light intensity values is greater than or equal to a difference preset threshold, determining that the attack occurs.

14. A protection method, applied to an intelligent lock, wherein the intelligent lock is mounted on a door body, and the method comprises:
after a quantity of trigger events detected in a first period is greater than or equal to a first preset value, adding 1 to a quantity of suspected attacks, wherein an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1;
obtaining a quantity of suspected attacks detected in a second period; and
enabling a protection mode after the quantity of suspected attacks detected in the second period is greater than or equal to a second preset value.

15. The method according to claim 14, wherein the intelligent lock further comprises an optical sensor, coupled to the processor, wherein the optical sensor is located on an outer side of the door body, and the optical sensor is configured to output a light intensity value; and
the method further comprises:
obtaining a plurality of light intensity values within preset duration; and
determining, based on the plurality of light intensity values, that an attack occurs, and enabling the protection mode.

16. The method according to claim 14 or 15, wherein
the determining, based on the plurality of light intensity values, that an attack occurs comprises:
recording a first quantity value plus 1 after a difference between any two detected adjacent light intensity values is greater than or equal to a difference preset threshold, wherein an initial value of the first quantity value is 0, a first quantity value recorded for the first time is the initial value plus 1, and a first quantity value recorded subsequently is a previous first quantity value plus 1; and
after the first quantity value is greater than a preset quantity value threshold, determining that the attack occurs.

17. The method according to claim 14 or 15, wherein
the determining, based on the plurality of light intensity values, that an attack occurs comprises:
after a difference between a largest light intensity value and a smallest light intensity value in the plurality of light intensity values is greater than or equal to a difference preset threshold, determining that the attack occurs.

18. A protection method, applied to an intelligent lock, wherein the intelligent lock is mounted on a door body, the intelligent lock comprises: a processor, and an optical sensor, coupled to the processor, wherein the optical sensor is located on an outer side of the door body, and the optical sensor is configured to output a light intensity value; and the method comprises:
after a quantity of trigger events detected in a first period is greater than or equal to a first preset value, adding 1 to a quantity of suspected attacks, wherein an initial quantity of suspected attacks is 0, a quantity of suspected attacks when a suspected attack occurs for the first time is the initial quantity plus 1, and a quantity of suspected attacks when a suspected attack occurs subsequently is a previous quantity of suspected attacks plus 1;
obtaining a plurality of light intensity values within preset duration; and
determining, based on the plurality of light intensity values, that an attack occurs, and enabling a protection mode.

19. A computer-readable storage medium, wherein the computer-readable storage medium comprises a computer program, and when the computer program is run on an intelligent lock, the intelligent lock is enabled to perform the method according to any one of claims 14 to 18.

20. A computer program product, wherein when the computer program product runs on an intelligent lock, the intelligent lock is enabled to perform the method according to any one of claims 14 to 18.
